# EUROPEAN PATENT APPLICATION

(11) **EP 1 233 339 A2**
(43) Date of publication of application: **21.08.2002**
(21) Application number: 02003442.7
(22) Date of filing: 14.02.2002
(51) Int. Cl.: G06F 9/46

(54) **Mobile agent transfer system, method and program for portable devices**

(30) Priority: 16.02.2001 JP 2001039884
(71) Applicant: NEC CORPORATION, Tokyo (JP)
(72) Inventor: Maeda, Naoto, Tokyo (JP); Nakajima, Shin, Tokyo (JP)
(74) Representative: Glawe. Delfs. Moll

(57) **Abstract**

A system, method, and program are provided which are capable of transferring a mobile agent between a portable device and a server (3, 3a, 3b). A program acquiring section (11, 11a) acquires transfer information containing a place code to provide an execution environment to a program code of the mobile agent, from an agent transferring section (32). The place code is interpreted and executed by a program control section (12), thereby implementing an agent unarchiving section (13), portable device side calculation processing section (14), and agent transmitting section (15) on the portable device. The mobile agent is unarchived by the agent unarchiving section (13) and the unarchived mobile agent performs processing in the portable device side calculation processing section (14). The mobile agent is then returned to an agent receiving section (34) which unarchives the returned mobile agent to have it again perform processing in a server side calculation processing section (35).

## Description

### BACKGROUND OF THE INVENTION

### Field of the Invention

The present invention relates to mobile agent transfer system, method and program for portable devices and more particularly to a system, method, and program of transferring a mobile agent for portable devices which enables the transfer of the mobile agent between a server and portable devices.

The present application claims priority of Japanese Patent Application No.2001-039884 filed on February 16,2001, which is hereby incorporated by reference.

### Description of the Related Art

An example of a conventional program transfer system for portable devices is disclosed in "Mobile Information Device Profile (JSR-37)" issued by Sun Microsystems in September 2000. This kind of the program transfer system for portable devices is a system in which an execution code is transferred from an information transfer device such as a Web server to the portable device and is then executed on the portable device.

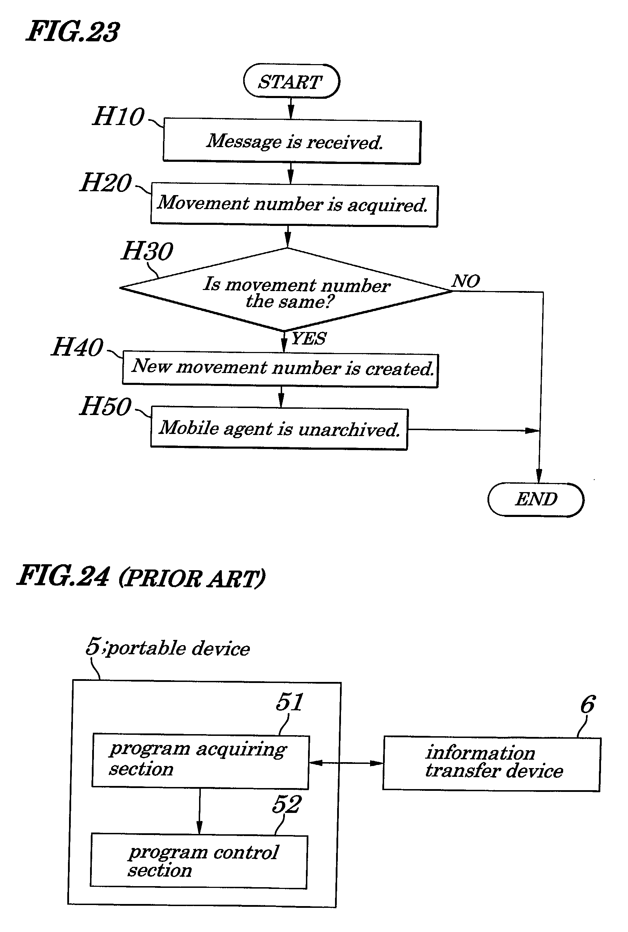

As shown in Fig. 24, the disclosed conventional program transfer system for portable devices includes a portable device 5 made up of a program acquiring section 51 and program control section 52 and an information transfer device 6. The information transfer device 6 has an archive containing an execution code of a program running on the portable device 5 and/or resources such as an image or a like to be used by the program and a program description file containing various program attributes such as names of vendors developing and distributing programs, program size, or a like.

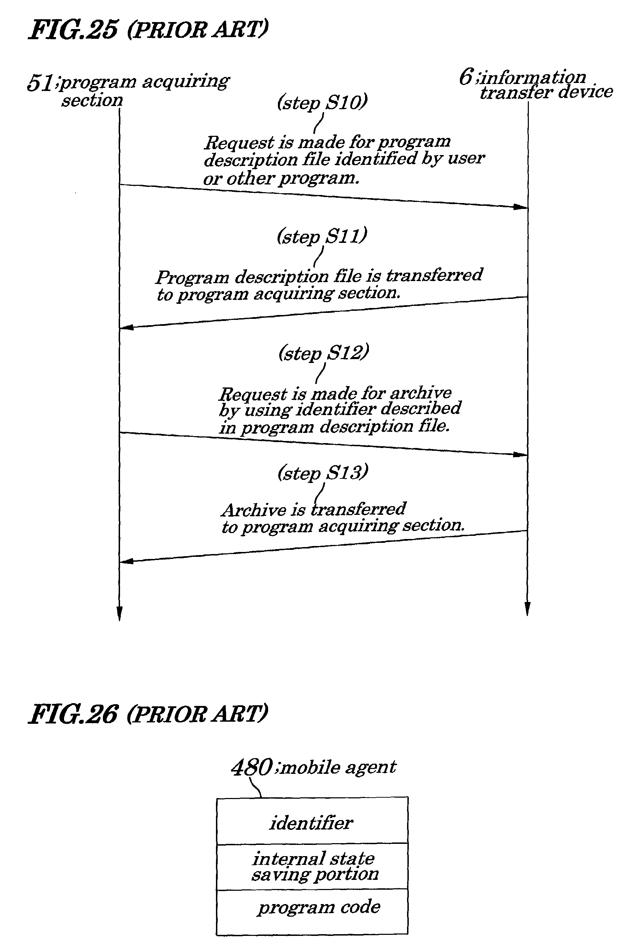

Next, operations of the conventional program transfer system for portable devices having such configurations as described above will be described below by referring to Fig. 25.

First, the program acquiring section 51 transmits an identifier such as a Uniform Resource Locator (URL) used to identify a specified program description file and then makes a request of the information transfer device 6 for the program description file designated by the identifier (Step S10). The information transfer device 6 transfers the program description file designated by the identifier to the program acquiring section 51 (Step S11). The program description file has an identifier used to identify a location of the archive containing its execution code and/or resources.

Next, the program acquiring section 51 transfers the identifier indicating the location of the archive described in the acquired program description file to the information transfer device 6 and makes a request of the information transfer device 6 to transfer the archive designated by the identifier (Step S12). The information transfer device 6 transfers the archive designated by the identifier to the program acquiring section 51 (Step S13). The program control section 52 executes and manages the program (execution code) acquired by the program acquiring section 51. The program control section 52 starts, terminates, suspends or resumes the execution of the program in accordance to manipulation of the portable device 5 by the user.

On the other hand, one example of a conventional mobile agent is disclosed in "Programing and Deploying Java Mobile Agents with Aglets" issued by Addison Wesley in 1998. The mobile agent is software that moves among places linked by networks and performs calculation processing or a like at a place to which the software has moved. In the case of the conventional mobile agent, it is required that any unit or device to which the mobile agent has moved has a "place" that can receive the mobile agent and that can provide an environment allowing the mobile agent to run. Figure 26 is a diagram showing a data configuration of a conventional mobile agent 480. As shown in Fig. 26, the conventional mobile agent 480 is made up of an identifier used to uniquely identify the mobile agent 480 in an entire system, an internal state saving portion used to save intermediate results from the calculation processing performed by the mobile agent 480 and a program code required to run the mobile agent 480.

However, in the conventional program transfer system, it is impossible to move the mobile agent to a portable device and to run the mobile agent in the portable device. This is firstly because, in the case of the conventional mobile agent, it is essential that any unit or device to which the mobile agent is to be moved has such the "place" as described above to receive the mobile agent, however, the available portable device such as a portable cellular phone or a like has no "place". This is secondly because, in the case of the conventional program transfer system, only transfer of a program code to the portable device from a server is taken into consideration and therefore the transfer of the identifier of a mobile agent and/or information about internal states of the mobile agent to the portable device from the server are impossible.

### SUMMARY OF THE INVENTION

In view of the above, it is an object of the present invention to provide a transfer system, method, and program which are capable of transferring a mobile agent between a portable device and a server.

According to a first aspect of the present invention, there is provided a mobile agent transfer system for portable devices (mobile communicating devices) including :
a server;
a portable device; and
wherein a mobile agent is transferred between the server and the portable device;
wherein the server has a configuration so as to transfer, to the portable device, a place code used to implement, on a side of the portable device, an environment in which the mobile agent is able to be executed when the mobile agent is transferred from the server to the portable device; and
wherein the portable device has a configuration so as to implement, on a side of the portable device and based on a place code transferred from the server, an environment in which the mobile agent is able to be executed.

With the above configuration, the environment in which the mobile agent is able to be executed is implemented on the portable device by the place code transmitted from the server to the portable device and therefore it is made possible to transfer the mobile agent between the server and the portable device.

In the foregoing, a preferable mode is one wherein the place code is a code used to implement, on the portable device, an agent unarchiving section (agent reconstructing section) to reconstruct the mobile agent based on information transmitted from the server, a portable device side calculation processing section to run the mobile agent reconstructed by the agent unarchiving section, and an agent transmitting section used to transmit the mobile agent having completed operations in the portable device side calculation processing section to the server and wherein the portable device has a program control section to implement, on the portable device and based on the place code transmitted from the server, the agent unarchiving section, the portable device side calculation processing section, and agent transmitting section.

According to a second aspect of the present invention, there is provided a mobile agent transfer system for portable devices including :
a server;
a portable device;
an information transfer device to connect the portable device to the server; and
wherein a mobile agent is transferred between the server and the portable device through the information transfer device;
wherein the server has a server side calculation processing section to run the mobile agent, an agent transferring section used to transfer, to the portable device, information about an internal state of the mobile agent, a program code of the mobile agent, a place code used to implement, on the portable device, an agent unarchiving section, portable device side calculation processing section and agent transmitting section, and an agent receiving section used to unarchive (retrieve) the mobile agent transferred from the portable device and to put the mobile agent into a state where the mobile agent is able to start operations in the server side calculation processing section, and
wherein the portable device has a program acquiring section used to acquire the information about an internal state of the mobile agent, the program code of the mobile agent, and the place code transmitted from the server and a program control section to implement, on the portable device and based on the place code acquired by the program acquiring section, the agent unarchiving section, portable device side calculation processing section and agent transmitting section, wherein the agent unarchiving section has a configuration so as to reconstruct the mobile agent based on the information about internal states of the mobile agent and the program code of the mobile agent, wherein the portable device side calculation processing section has a configuration so as to run the mobile agent reconstructed by the agent unarchiving section and wherein the agent transmitting section has a configuration so as to transmit the mobile agent having completed operations in the portable side calculation processing section to the server.

In the foregoing, a preferable mode is one wherein the server has a standby list creating section used to transmit, to the portable device, a standby list showing mobile agents being in a standby state to be transferred to the portable device, wherein the portable device has a standby list displaying section used to provide the standby list transmitted from the server to a user or other device and to notify the program acquiring section of the mobile agent selected by the user or other device out of mobile agents indicated by the provided standby list, and wherein the program acquiring section has a configuration so as to make a request for acquiring the mobile agent notified by the standby list displaying section to the server.

With above configuration, a standby list indicating mobile agents being in a standby state to be transferred to a portable device is transmitted from the server to the portable device and therefore it is made possible for a user of the portable device to confirm or check any mobile agent being in a standby state to be transferred to the portable device.

Also, a preferable mode is one wherein the server has a movement number managing section used to create and manage a movement number required to ignore messages other than a message that has first arrived when a plurality of messages each having same contents to transfer a mobile agent has reached the agent receiving section from the agent transmitting section in the portable device due to a failure of a network.

With the above configuration, it is possible to prevent an event in which a plurality of mobile agents each having same contents operates on a server due to a failure of a network or a like.

Also, a preferable mode is one wherein the agent transferring section has an agent waiting section used to manage information about an identifier of a mobile agent and location of a program code of the mobile agent being in a standby state to be transferred to the portable device, a program description file creating section used to make a request of a program archive creating section to create an archive when a request for a program description file for a mobile agent is made from the program acquiring section and to return the program description file containing a location of the archive created by the program archive creating section to the program acquiring section, and a program archive creating section used to create, in response to a request from the program description file creating section, an archive containing a program code of a mobile agent, information about an internal state of the mobile agent, and a place code, and to return, in response to a request from the program acquiring section, the archive.

According to a third aspect of the present invention, there is provided a method for transferring a mobile agent for portable devices between a portable device and a server, the method including:
a step in which the server transfers, to the portable device, a place code used to implement, on a side of the portable device, an environment in which the mobile agent is able to be executed when the mobile agent is transferred from the server to the portable device; and
a step in which the portable device implements, on the portable device and based on the place code transferred from the server, an environment in which the mobile agent is executed.

In the foregoing, a preferable mode is one wherein the place code is used to implement, on the portable device, an agent unarchiving section used to reconstruct the mobile agent based on information transmitted from the server, a portable device side calculation processing section to run the mobile agent reconstructed by the agent unarchiving section, and an agent transmitting section used to transfer the mobile agent having completed operations in the portable device side calculation processing section to the server and wherein the portable device has a program control section to implement, on the portable device and based on the place code transmitted from the server, the agent unarchiving section, the portable device side calculation processing section, and agent transmitting section.

According to a fourth aspect of the present invention, there is provided a method for transferring a mobile agent for portable devices for transferring the mobile agent between a portable device and a server, the method including :
a step in which the server transfers information about an internal state of a mobile agent, a program code of the mobile agent, and a place code used to implement, on the portable device, an agent unarchiving section, portable device side calculation processing section and agent transmitting section, to the portable device;
a step in which the portable device implements, based on the place code transmitted from the server, an agent unarchiving section, portable device side calculation processing section, and agent transmitting section;
a step in which the agent unarchiving section reconstructs a mobile agent, based on the information about internal states and program code of the mobile agent transmitted from the server;
a step in which the portable device side calculation processing section executes the mobile agent that has been reconstructed by the agent unarchiving section; and
a step in which the agent transmitting section transmits the mobile agent having completed operations in the portable device side calculation processing section.

In the foregoing, a preferable mode is one wherein the server transmits, to the portable device, a standby list showing mobile agents being in a standby state to be transferred to the portable device and wherein the portable device provides the standby list transmitted from the server to a user or other device and to make a request of the server for the mobile agent selected by the user or other device out of mobile agents indicated by the provided standby list.

Also, a preferable mode is one wherein the server creates and manages a movement number required to ignore messages other than a message that has first arrived when a plurality of messages each having same contents to transfer a mobile agent has reached the agent receiving section from the portable device due to a failure of a network.

According to a fifth aspect of the present invention, there is provided a program for implementing a mobile agent transfer system for portable devices to enable the mobile agent to be transferred between a computer for a portable device and a computer for a server including :
processing of having the computer for the server transfer a place code used to implement, on the computer for the portable device, an environment in which the mobile agent is able to be executed when the mobile agent is transferred to the computer for the portable device; and
processing of having the computer for the portable device implement, on the computer for the portable device and based on a place code transferred from the computer for the server, an environment in which the mobile agent is able to be executed.

According to a sixth aspect of the present invention, there is provided a program for implementing a mobile agent transfer system for portable devices to enable the mobile agent to be transferred between a computer for a portable device and a computer for a server including:
processing of having the computer for the server function as a server computer side calculation processing section to run the mobile agent, as an agent transferring section to transfer, to the computer for the portable device, information about internal states of the mobile agent and about a program code of the mobile agent and a place code used to implement, on the computer for the portable device and based on internal states and program code of the mobile agent transmitted from the computer for the server, an agent unarchiving section to reconstruct the mobile agent, portable device side calculation processing section to run the mobile agent reconstructed by the agent unarchiving section, and an agent transmitting section to transmit the mobile agent having completed operations in the portable device side calculation processing section to the computer for the server, and as an agent receiving section to unarchive the mobile agent transferred from the computer for the portable device and to put the mobile agent into a state where the mobile agent is able to start operations on the server computer side calculation processing section, and
processing of having the computer for the portable device function as a program acquiring section to acquire information about internal states and program code of the mobile agent transmitted from the computer for the server and a place code, and as a program control section to implement, on the computer for the portable device and based on the place code acquired by the program acquiring section, the agent unarchiving section, portable device side calculation processing section, and agent transmitting section.

With above configurations, a place code used to implement an execution environment where a mobile agent can be executed on a portable device is transmitted from a server to the portable device and the portable device implements, based on the received place code, the execution environments (such as the agent unarchiving section, portable device side calculation processing section, agent transmitting section, or a like) and it is therefore made possible to transfer the mobile agent between the server and the portable device.

With another configuration as above, a standby list showing the mobile agents being in a standby state to be transferred to the portable device is transmitted from the server to the portable device and the standby list is provided to a user or a like of the portable device and it is therefore made possible for the user or a like to easily recognize the mobile agent being in a standby state to be transferred to the portable device of the user or a like.

With still another configuration as above, a movement number managing section is provided and it is therefore made possible to prevent occurrence of operations of a plurality of mobile agents each having same contents on a side of the server caused by failures or a like of a network.

### BRIEF DESCRIPTION OF THE DRAWINGS

The above and other objects, advantages, and features of the present invention will be more apparent from the following description taken in conjunction with the accompanying drawings in which:
Fig. 1 is a schematic block diagram showing an example of configurations of a mobile agent transfer system for portable devices according to a first embodiment of the present invention;
Fig. 2 is a schematic block diagram describing an example of configurations of an agent transferring section employed in the mobile agent transfer system according to the first embodiment of the present invention;
Fig. 3 is a flowchart explaining a flow of processing to be performed by each of portable devices employed in the mobile agent transfer system according to the first embodiment of the present invention;
Fig. 4 is a flowchart explaining a flow of processing of creating a program description file employed in the mobile agent transfer system according to the first embodiment of the present invention;
Fig. 5 is a flowchart explaining a flow of processing of transferring an archive employed in the mobile agent transfer system according to the first embodiment of the present invention;
Fig. 6 is a flowchart explaining a flow of processing of receiving a mobile agent employed in the mobile agent transfer system according to the first embodiment of the present invention;
Fig. 7 is a diagram showing a data configuration of an example of transfer information employed in the mobile agent transfer system according to the first embodiment of the present invention;
Fig. 8 is a diagram showing a data configuration of an example of an archive employed in the mobile agent transfer system according to the first embodiment of the present invention;
Fig. 9 is a diagram showing a data configuration of an example of a program description file employed in the mobile agent transfer system according to the first embodiment of the present invention;
Fig. 10 is a diagram showing a data configuration of an example of a message employed in the mobile agent transfer system according to the first embodiment of the present invention;
Fig. 11 is a diagram showing a data configuration of an example of a first associative table managed by an agent waiting section employed in the mobile agent transfer system according to the first embodiment of the present invention;
Fig. 12 is a diagram showing a data configuration of an example of a second associative table managed by the agent waiting section employed in the mobile agent transfer system according to the first embodiment of the present invention
Fig. 13 is a schematic block diagram showing an example of configurations of a mobile agent transfer system for portable devices according to a second embodiment of the present invention;
Fig. 14 is a schematic block diagram showing a relation of connection between an agent transferring section and a standby list creating section employed in the second embodiment of the present invention;
Fig. 15 is a diagram showing one example of a standby list employed in the second embodiment of the present invention;
Fig. 16 is a flowchart showing a flow of standby list acquiring processing employed in the second embodiment of the present invention;
Fig. 17 is a flowchart showing a flow of standby list creating processing employed in the second embodiment of the present invention;
Fig. 18 is a schematic block diagram showing an example of configurations of a mobile agent transfer system for portable devices according to a third embodiment of the present invention;
Fig. 19 is a diagram showing an example of a movement number managing data employed in the third embodiment of the present invention;
Fig. 20 is a schematic block diagram showing an example of configurations of an agent transferring section employed in the third embodiment of the present invention;
Fig. 21 is a diagram showing an example of a program description file created in the third embodiment of the present invention;
Fig. 22 is a diagram showing a data configuration of an example of a message created in the third embodiment of the present invention;
Fig. 23 is a flowchart showing a flow of processing of receiving a mobile agent performed when a movement number is used in the third embodiment of the present invention;
Fig. 24 is a schematic block diagram showing one example of a conventional program transfer system for portable devices;
Fig. 25 is a sequence diagram explaining an example of operations of the conventional program transfer system for portable devices; and
Fig. 26 is a diagram showing a data configuration of a conventional mobile agent.

### DETAILED DESCRIPTION OF THE PREFERRED EMBODIMENTS

Best modes of carrying out the present invention will be described in further detail using various embodiments with reference to the accompanying drawings.

### First Embodiment

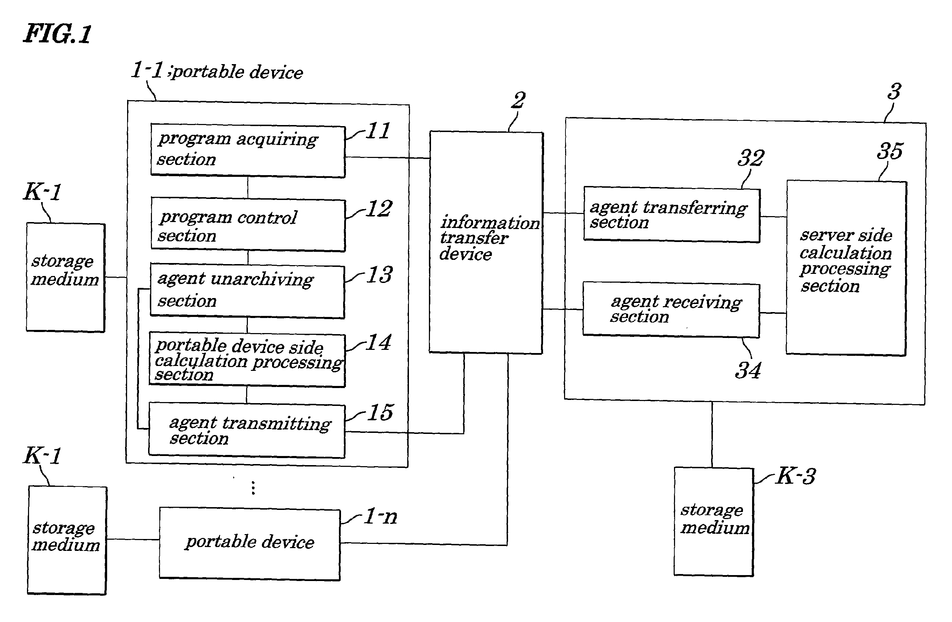

Figure 1 is a schematic block diagram showing an example of configurations of a mobile agent transfer system for portable devices according to a first embodiment of the present invention. The mobile agent transfer system for portable devices of the first embodiment includes portable devices 1-1 to 1-n such as portable cellular phones that can run a program, a server 3 adapted to transfer a mobile agent to the portable devices 1-1 to 1-n, and an information transfer device 2 used to link the server 3 to the information transfer device 2 such as a Web server by networks.

The portable device 1-1 has a program acquiring section 11, a program control section 12, an agent unarchiving section 13, a portable device side calculation processing section 14, an agent transmitting section 15 and a storage medium K1. Other portable devices 1-2 to 1-n have the same configurations as the portable device 1-1.

The program acquiring section 11 acquires a program description file and an archive from an agent transferring section 32 in the server 3 through the information transfer device 2.

The program control section 12 executes and manages a program code and place code contained in the archive that the program acquiring section 11 has acquired. The execution of the place code results in implementing functions of the agent unarchiving section 13, the portable device side calculation processing section 14 and the agent transmitting section 15 on the portable device 1-1.

The agent unarchiving section 13 reconstructs a mobile agent based on information contained in the program description file and in the archive so that the portable device side calculation processing section 14 can start execution of the mobile agent.

The portable device side calculation processing section 14 provides an execution environment that allows the mobile agent to be executed.

The agent transmitting section 15 transfers the mobile agent that has terminated its operations in the portable device side calculation processing section 14 to an agent receiving section 34 in the server 3.

The storage medium K1 is a disk, a semiconductor memory, or a like which stores a program used to cause the portable device 1-1 to function as part of the mobile agent transfer system for portable devices. This program is read by a CPU (Central Processing Unit) (not shown) in the portable device 1-1 and is used to control operations of the portable device 1-1, resulting in implementing the program acquiring section 11 and the program control section 12 on the portable device 1-1.

The server 3 includes the agent transferring section 32, the agent receiving section 34, a server side calculation processing section 35 and a storage medium K3.

The server side calculation processing section 35 provides an execution environment to allow the mobile agent to be executed.

The agent transferring section 32 transfers the mobile agent having terminated its operations in the server side calculation processing section 35 and is in a standby state to be moved to the portable device 1-1, to a portable device designated by the mobile agent out of the portable devices 1-1 to 1-n. Moreover, the agent transferring section 32, when receiving a request made by the program acquiring section 11 in the portable devices 1-1 to 1-n asking for a program description file and archive, transfers the requested program description file and archive, using the information transfer device 2, to the program acquiring section 11 that has asked for them.

The agent receiving section 34 receives, through the information transfer device 2, a message containing an identifier of the mobile agent and information about internal states of the mobile agent that have been transmitted from the agent transmitting section 15 in the portable devices 1-1 to 1- n. The mobile agent is unarchived based on the received message so that the mobile agent is put in a state where it can again start its operations in the server side calculation processing section 35.

The storage medium K3 is a disk, a semiconductor memory, or a like in which a program to cause the server 3 made up of computers to function as a part of the mobile agent transfer system for portable devices is stored. This program is read by the server 3 and is used to control operations of the server 3, thus resulting in implementing the agent transferring section 32, agent receiving section 34, and server side calculation processing section 35 on the server 3.

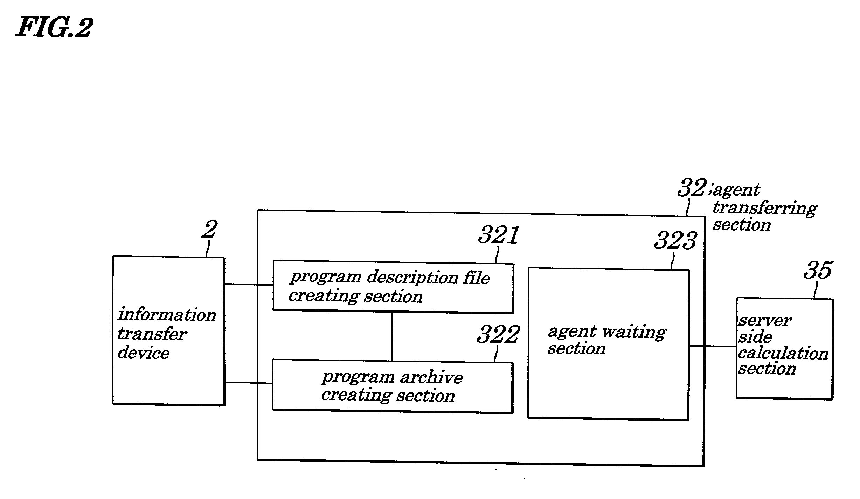

Next, configurations of the agent transferring section 32 are explained further in detail by referring to Fig. 2. Figure 2 is a schematic block diagram showing an example of configurations of the agent transferring section 32. The agent transferring section 32 may be made up of a plurality of elements and includes a program description file creating section 321, a program archive creating section 322, and an agent waiting section 323.

The agent waiting section 323 manages information about the above mobile agent during a period of time from start of movement of one mobile agent being operating in the server side calculation processing section 35 to the portable device 1-1 to completion of the movement for transfer to the portable device 1-1, that is, while the mobile agent is in a standby state to be transferred. Information about the mobile agent being managed by the agent waiting section 323 and being in the standby state is utilized by the program description file creating section 321 and by the program archive creating section 322.

The program description file creating section 321, when receiving a request made by the program acquiring section 11 in the portable devices 1-1 to 1-n asking for the program description file, creates the program description file and transmits it to the program acquiring section 11 that has requested it. The program description file creating section 321, when creating the program description file, acquires the information about the mobile agent from the agent waiting section 323. Moreover, the program description file creating section 321 makes a request of the program archive creating section 322 to create the archive and then acquires, from the program archive creating section 322, information about a place of the archive created in response to the above request for the creation of the archive.

The program description file creating section 322, when having received the request made by the program description file creating section 321 for the creation of the archive, acquires information about the mobile agent required for the creation of the archive from the agent waiting section 323 and creates the archive and then transmits the information about the place of the created archive to the program description file creating section 321. Also, the program archive creating section 322, when receiving a request for acquirement of the archive from the program acquiring section 11 in the portable devices 1-1 to 1-n, transfers the archive to the program acquiring section 11 that has requested it.

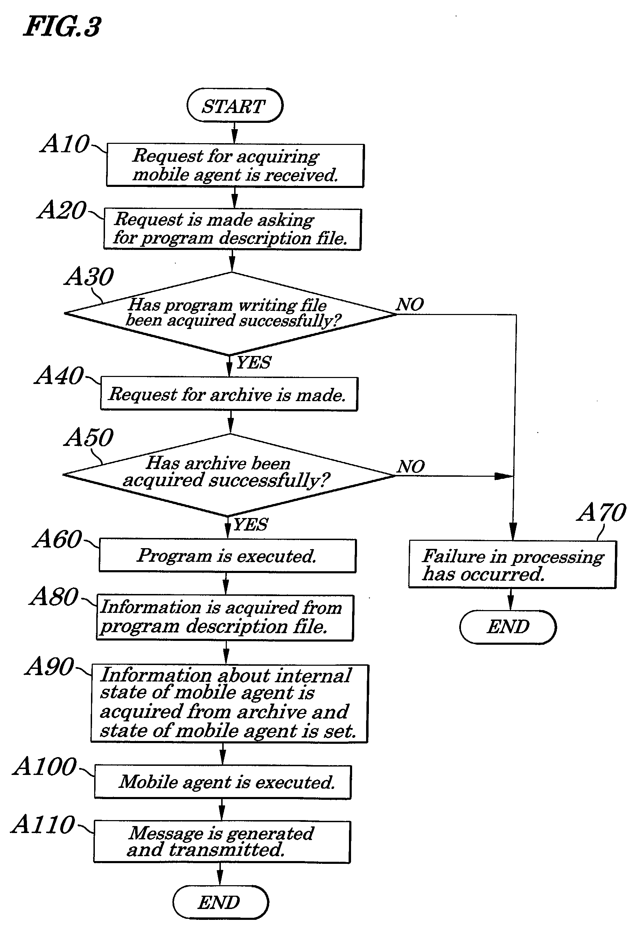

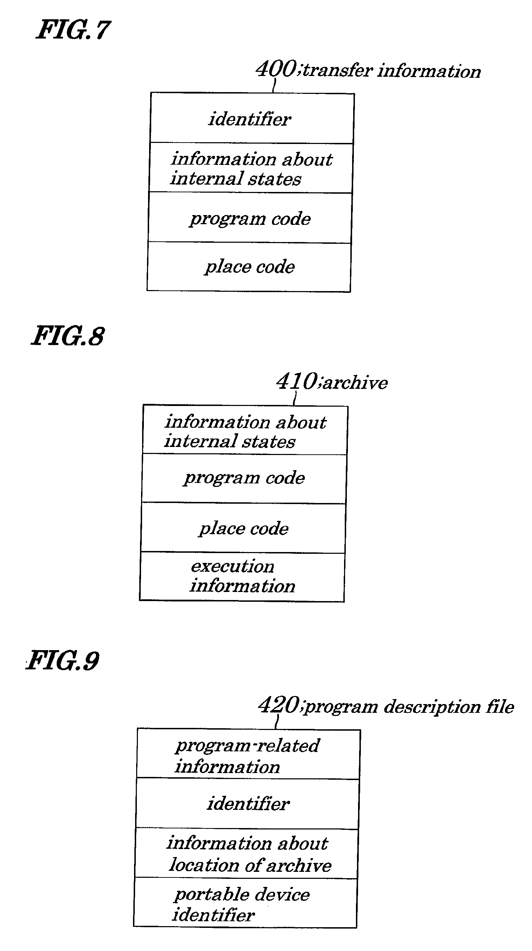

Next, entire operations of the mobile agent transfer system of the first embodiment will be described in detail by referring to flowcharts shown in Figs. 3 to 6 and to data configurations shown in Figs. 7 to 12.

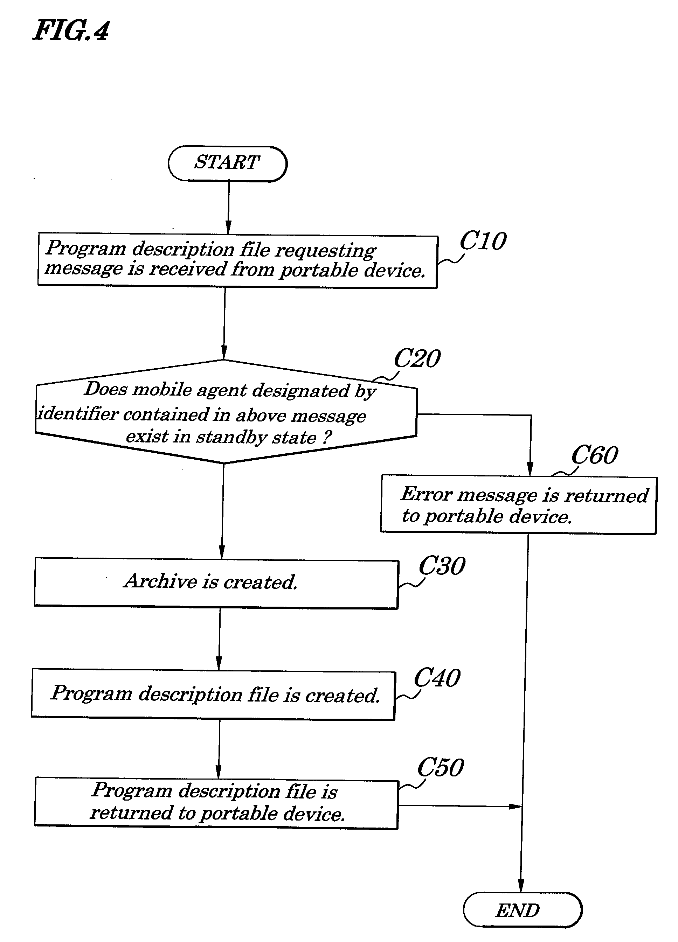

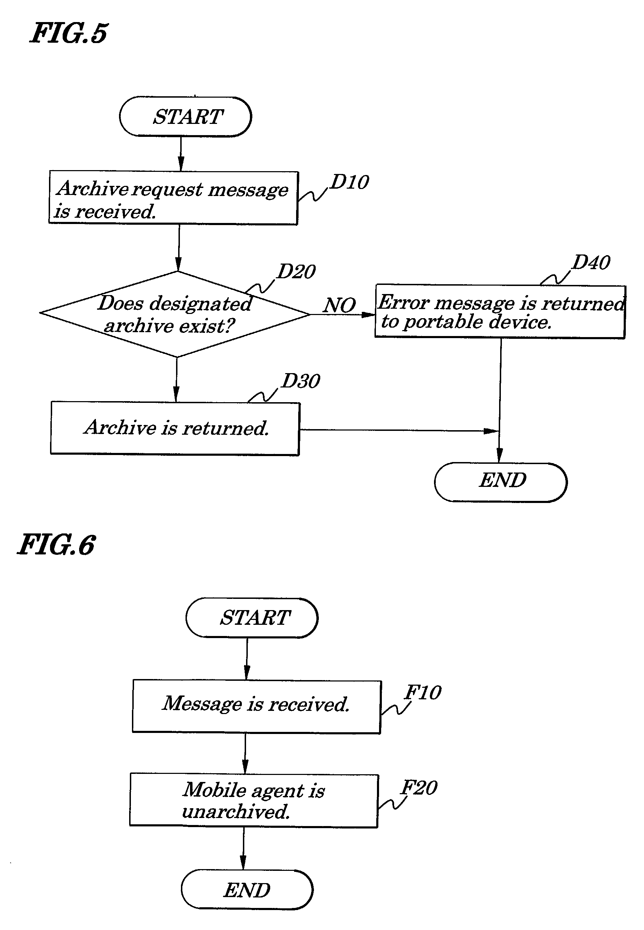

Figure 3 is a flowchart explaining processing to be performed from when a portable device 1- j ( 1 ≦ j ≦ n) acquires a program description file and an archive from the server 3 and then runs the mobile agent on the portable devices 1- j to when the portable device 1- j again transfers the mobile agent to the server 3. Figure 4 is also a flowchart showing a flow of processing from creation of a program description file on a side of the server 3 to transfer of the program description file to the portable device 1- j. Figure 5 is also a flowchart showing a flow of processing from creation of an archive on the side of the server 3 and transfer of the archive to the portable device 1 - j. Figure 6 is also a flowchart showing a flow of processing in which the server 3 receives the mobile agent transmitted from the portable device 1- j.

Figure 7 shows information that has to be transferred from the agent transferring section 32 to the program acquiring section 11 in the portable device 1 - j when the agent transferring section 32 in the server 3 transfers the mobile agent to the program acquiring section 11 in the portable device 1- j and the information contains an identifier of the mobile agent, information about internal states of the mobile agent and program code of the mobile agent and a place code. The above information is here called transfer information 400 (Fig. 7). The place code is an execution code having a function to execute the mobile agent and therefore to drive the agent unarchiving section 13, portable device side calculation processing section 14, and agent transmitting section 15. Moreover, in the embodiment of the present invention, the information about internal states of the mobile agent, the program code of the mobile agent and the place code which make up the transfer information 400 are transferred in a form of an archive, while the identifier of the mobile agent is transferred in a form of an program description file.

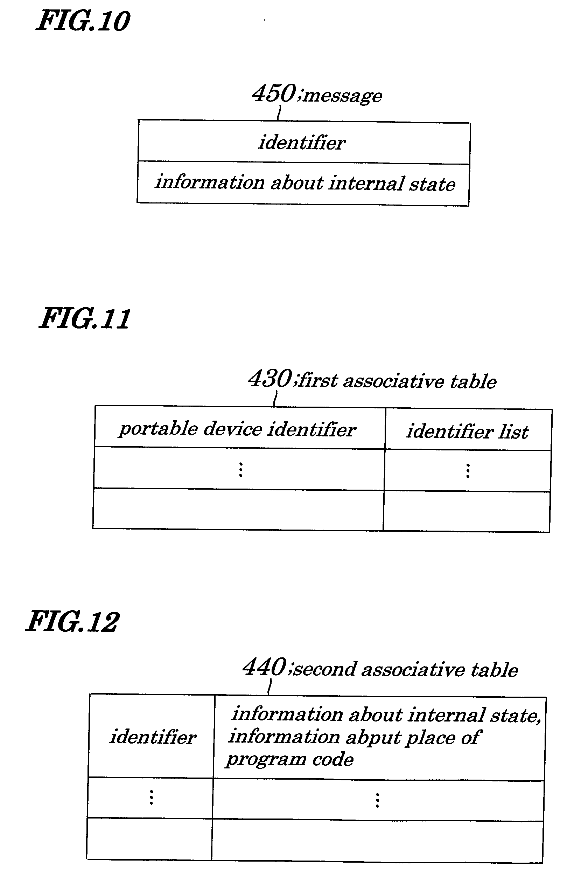

Figure 8 is a diagram showing a data configuration of an example of an archive 410 to be created by the program archive creating section 322. Figure 9 is a diagram showing a data configuration of an example of a program description file 420 to be created by the program description file creating section 321. Figure 10 is a diagram showing a data configuration of an example of a message 450 which is to be transmitted from the agent transmitting section 15 in the portable device 1- j to the agent receiving section 34 in the server 3 so that the mobile agent is transferred from the portable device 1-j to the server 3. Figures 11 and 12 are diagrams showing data configurations of examples of first and second associative tables which characterize the agent waiting section 323.

First, as shown in Fig. 3, the program acquiring section 11 in the portable device 1-j receives an identifier of the mobile agent, information about a location of the information transfer device 2 and information about a location of the server 3 interpreted by the information transfer device 2 from a user of the portable device 1-j or from an other system incorporated into the mobile agent transfer system (Step A10). The location of the information transfer device 2 and the location of the server 3 may be provided in a form of Uniform Resource Locators (URL).

The program acquiring section 11 creates a program description file requesting message containing an identifier of the designated mobile agent and transfers it to the program description file creating section 321 in the agent transferring section 32 (Step A20) . Moreover, if the agent transferring section 32 in the server 3 has no means to identify a sender of the message, the program acquiring section 11 in the portable device 1- j incorporates a portable device identifier that can identify the portable device 1-j being the sender of the message into the above program description file requesting message. In the embodiment of the present invention, an identifier of the mobile agent is contained in the program description file requesting message, however, instead of the identifier of the mobile agent, a key provided in an associative table used to acquire an identifier of the mobile agent may be contained in the program description file requesting message. In this case, registration of the associative table indicating a corresponding relation between an key and an identifier of the mobile agent on the agent transferring section 32 is required.

As shown in Fig. 4, the program description file creating section 321, when having received the program description file requesting message from the portable device 1- j, checks to see whether the mobile agent designated by the identifier contained in the above message exists in a standby state, by making a reference to information being managed by the agent waiting section 323 (Steps C10 and C20).

Processing in Step C20 is described in detail below. That is, the agent waiting section 323 manages information about the mobile agent being in a standby state to be transferred to the portable devices 1 - 1 to 1 - n. The information about the mobile agent being in a standby state managed by the agent waiting section 323 is provided, for example, by a first associative table 430 and a second associative table 440 shown in Figs. 11 and 12. In the first associative table 430 in Fig. 11, the portable device identifier is used as a key and a list of identifiers is one that corresponds to the key and is expressed by a value. In the second associative table 440 in Fig. 12, an identifier of a mobile agent is used as a key and a set of information about a location of a program code of a mobile agent and information about an internal state of the mobile agent is given which corresponds to the key and which is expressed by another value. The first associative table 430 and the second associative table 440 are updated when processing of moving the mobile agent being operating in the server side calculation processing section 35 to the portable device 1- j is performed. More particularly, when a mobile agent is put in a standby state, an identifier of the mobile agent is registered on the first associative table 430 in a manner so as to be associated with a portable device identifier of a portable device to which the mobile agent moves and, at the same time, an identifier of the mobile agent, internal state of the mobile agent, and location of a program code of the mobile agent being put into a standby state are registered on the second associative table 440. Moreover, when the mobile agent has been transferred to the portable device 1- j, information about the above mobile agent is deleted from the first associative table 430 and the second associative table 440.

If the information being managed by the agent waiting section 323 in the server 3 has such contents as shown in Figs. 11 and 12, the program description file creating section 321 searches for the first associate table 430 by using the portable device identifier of the portable device 1-j being a device from which the program description file requesting message has been transferred and acquires a list of identifiers of the mobile agents being registered in a manner so as to be associated with the above portable device identifier. Then, the program description file creating section 321, by making an inspection as to whether the identifier indicated by the above program description file requesting message is contained in the list, checks to see whether or not a mobile agent having the designated identifier exists in a standby state.

Then, if the identifier indicated by the above program description file requesting message is not contained in the list (that is, if a NO answer is obtained in Step C20 in Fig. 4), since the mobile agent having the designated identifier exists in a standby state, the program description file creating section 321 returns an error message to the program acquiring section 11 in the portable device 1- j (Step C60 in Fig. 4). If the identifier indicated by the program description file requesting message is contained in the list (that is, a YES answer is obtained in Step C20 in Fig. 4), the routine proceeds to Step C30 in order to transfer the mobile agent having the designated identifier.

In Step C30, the program description file creating section 321 transmits a request message for creation of an archive to the program archive creating section 322. This request message contains an identifier of the mobile agent indicated by the above program description file requesting message. In response to the request message, the program archive creating section 322, by using the above identifier, acquires information about a location of the program code of the mobile agent and information about internal states of the mobile agent from the second associative table 440 in the agent waiting section 323 and then, based on the information about the location of the program code, obtains a program code. After that, the program archive creating section 322 creates an archive containing, in addition to the obtained program code of the mobile agent and information about internal states of the mobile agent, a place code being common to all mobile agents that have been possessed by the program archive creating section 322 itself. Figure 8 shows one example of the data configuration of the archive 410 created by the program archive creating section 322. Moreover, the archive may contain execution information required to execute a code. For example, if the code is made up of a plurality of execution files or classes, a name of the file or class to be first executed may be contained in the archive. Furthermore, resources such as an image to be used by programs may be contained in the archive.

In Step C40, the program archive creating section 322 transmits information about the location where the archive has been created to the program description file creating section 321. The archive may be saved in a file system or a like. In order to show the location of the archive, a file name containing a directory or the URL may be used. The program description file creating section 321, when having received the information about the location of the archive from the program archive creating section 322, creates, for example, the program description file 420 as shown in Fig. 9 containing the received information about the location of the archive.

The program description file 420 shown in Fig. 9 includes, in addition to information about a location of an archive, an identifier of a mobile agent to be transferred to the portable device 1- j, a portable device identifier of the portable device 1- j being a device to which the mobile agent is transferred, and program-related information.

Here, the identifier of the mobile agent is required when the agent unarchiving section 13 is not provided with a method for acquiring the identifier (the identifier of the mobile agent contained in the program description file requesting message transferred by the program acquiring section 11 to the server 3) of the mobile agent from the program control section 12 and, if the agent unarchiving section 13 is provided with such the method, the identifier of the mobile agent may be made unnecessary. Moreover, when an identifier of a mobile agent is contained in the program description file requesting message transmitted from the program acquiring section 11, it can be used, as it is, as an identifier of the mobile agent in the program description file 420. However, if a key of the associative table is contained in the program description file requesting message, a value (identifier of the mobile agent) in the associative table corresponding to the key is used as the identifier of the mobile agent in the program description file 420.

Furthermore, the portable device identifier is required when the agent receiving section 34 cannot identify a sender of the program description file requesting message and the agent unarchiving section 13 is not provided with a method for acquiring any portable device identifier which can identify the portable device 1- j being now operated from the portable device 1- j and, therefore, if the agent unarchiving section 13 is provided with such the method, the portable device identifier may be made unnecessary.

The program-related information is information required to have the program operate on the portable device 1-j. More particularly, the Mobile Information Device Profile (JSR-37) issued in September 2000 describes that a name of an archive, a version of the archive, a name of a vendor who has created the archive, and URL indicating a location of the archive should be contained in an application description file. This information is interpreted by the program acquiring section 11.

Moreover, though not shown in the example in Fig. 9, if the agent unarchiving section 13 is not provided with a method for acquiring information about a location of the information transfer device 2 and about a location of the server 3 to be interpreted by the information transfer device 2, from the program acquiring section 11 or the program control section 12, it is necessary that the location of the information transfer device 2 and the location of the server 3 to be interpreted by the information transfer device 2 should be contained in the program description file.

The program description file creating section 321 creates the program description file as shown in Fig. 9 (Step C40) and returns it to the program acquiring section 11 in the portable device 1- j (Step C50).

The program acquiring section 11 in the portable device 1-j checks a value returned from the program description file creating section 321 (Fig. 3, Step A30). If the returned value indicates an error, it means that a failure in the processing has occurred. A message showing the occurrence of the failure is displayed, for example, on a screen (not shown) of the portable device 1- j and the processing is terminated (Step A70). If the program description file has been acquired successfully, the routine proceeds to Step A40.

In Step A40, the program acquiring section 11 analyzes contents described in the program description file 420 acquired in Step A30 and transmits an archive requesting message used to make a request of the program archive creating section 322 for the archive, to the program archive creating section 322. The archive requesting message is constructed so as to contain a location of the archive to be provided in the program description file 420.

The program archive creating section 322, when having received the archive requesting message containing information about the location of the archive, checks if the archive exists at an assigned location of the archive (Fig. 5, Step D10, and Step D20). If the processing designated in the embodiment of the present invention has been normally performed, the archive 410 must be created at the assigned location in Step D30. However, if the archive 410 does not exist at the assigned location, an error message is returned to the portable device 1- j (Step D40). If the archive 410 exists at the assigned location, the program archive creating section 322 transfers it to the program acquiring section 11 (Step D30).

The program acquiring section 11 checks a value returned from the program archive creating section 322 (Fig. 3, Step A50). If the returned value indicates an error, it means that a failure in the processing has occurred and a message showing the occurrence of the failure is displayed, for example, on the screen (not shown) of the portable device 1- j and the processing is terminated (A70). If the program description file has been acquired successfully, the routine proceeds to Step A60.

In Step A60, the program control section 12, by using the program description file 420 acquired by the program acquiring section 11 and the archive 410, executes a place code contained in the archive 410. This causes the mobile agent proper contained in the archive 410 or the program description file 420 to be accepted by the portable device 1-j and a function of the "place" providing an operation environment to operate on the portable device 1 - j. More particularly, this causes the agent unarchiving section 13, portable device side calculation processing section 14, and agent transmitting section 15 to be implemented on the portable device 1 - j.

Next, control is transferred to the agent unarchiving section 13. The agent unarchiving section 13 acquires information about an internal state of the mobile agent and a place code of the mobile agent from the archive 410 (Step A80). The agent unarchiving section 13, by using the information about the internal state and about the place code, reconstructs the mobile agent on the portable device side calculation processing section 14 (Step A90). The mobile agent is then executed on the portable device side calculation processing section 14 in the portable device 1 - j (Step A100).

When the execution of the mobile agent is completed, the agent transmitting section 15 transmits a message 450 to the agent receiving section 34 to transfer the mobile agent to the server 3 from which the mobile agent has been transmitted (Step A110). A data configuration of the message 450 is shown in Fig. 10. The message 450 is made up of an identifier of a mobile agent and information about an internal state of the mobile agent. The agent transmitting section 15 acquires the identifier of the mobile agent being operated on the portable device side calculation processing section 14 from the agent unarchiving section 13 and the information about internal states from the mobile agent to create the above message 450.

The agent receiving section 34 receives the message 450 (Fig. 6, Step F10). The mobile agent is unarchived by using the identifier and the information about the internal state of the mobile agent contained in the message 450 shown in Fig. 10 and is put into a state in which the mobile agent again can start operations in the server side calculation processing section 35 (Fig. 6, Step F20).

In the embodiment of the present invention, in order to transfer the mobile agent from the server 3 to the portable devices 1-1 to 1- n, a code of the mobile agent and information about internal states of the mobile agent are saved in the archive while a place of the archive, an identifier of the mobile agent, a portable device identifier or a like are saved in the program description file. Other information except the code of the mobile agent and the place of the archive such as the identifier of the mobile agent, portable device identifier, or a like may be contained in either of the archive or the agent description file. However, a size of the information about internal states of the mobile agent is larger than that of other information to be contained in the program description file and therefore the information about internal states of the mobile agent is preferably contained in the archive.

### Second Embodiment

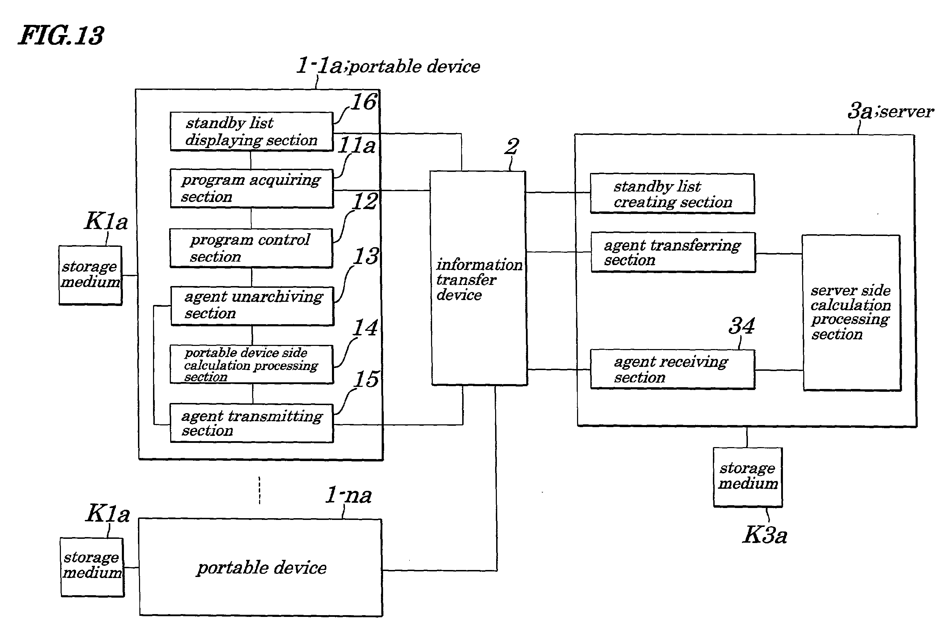

Figure 13 is a schematic block diagram showing an example of configurations of a mobile agent transfer system for portable devices according to a second embodiment of the present invention. Configurations of the mobile agent transfer system of the second embodiment differ from those of the first embodiment in that, instead of portable devices 1-1 to 1 - n, portable devices 1 - 1a to 1 - na are provided and, instead of a server 3, a server 3a is provided.

Configurations of the portable device 1 - 1a of the second embodiment differ from those of the portable device 1-1 shown in Fig. 1 in that a standby list displaying section 16 is added, a program acquiring section 11a is provided instead of a program acquiring section 11 and a storage medium K1a is provided instead of a storage medium K1. Moreover, other portable devices 1-2a to 1-na have the same configurations as the portable device 1-1a.

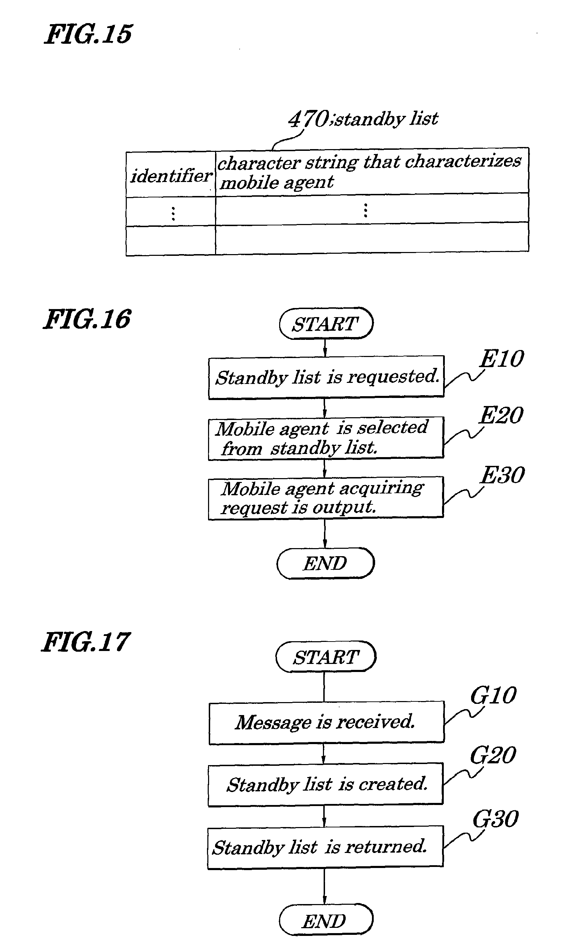

The standby list displaying section 16 has functions of acquiring a standby list from the server 3a in response to a request from a user or a like of the portable device 1-1a and of displaying it on a screen of the portable device 1-1a. The standby list is a list of mobile agents being in a standby state in the server 3a to be transferred to the portable device 1 - 1a. Therefore, the standby list 470 contains identifiers of zero or more pieces of the mobile agents being in a standby state to be transferred. Moreover, the standby list 470 may be a table in which additional information is provided to each of the identifiers of the mobile agents. Figure 15 is a diagram showing one example of the standby list 470. The standby list 470 is made up of the identifier of the mobile agent and a character string (such as the character string that characterizes the mobile agent) to be interpreted by humans. The standby list 470 is very effective because a user can recognize, based on the character string, what kind of the mobile agent is in a standby state. Furthermore, the standby list displaying section 16 has a function of outputting a request for acquiring the mobile agent containing an identifier of the mobile agent, out of the mobile agents in the standby list 470 being displayed on the screen, selected by the user or a like, to the program acquiring section 11a.

The program acquiring section 11a has a function, in addition to the function that the program acquiring section 11 shown in Fig. 1 has, of receiving the request for acquiring the mobile agent from the standby list displaying section 16.

The storage medium K1a is a disk, semiconductor memory, or other storage medium and stores a program to have the portable device 1-1a function as a part of the mobile agent transfer system for portable devices. This program is read by a CPU (not shown) in the portable device 1-1a and is used to control operations of the portable device 1-1a, resulting in implementing the standby list displaying section 16, the program acquiring section 11a and a program control section 12 on the portable device 1-1a.

Configurations of the server 3a of the second embodiment differ from those of the first embodiment in that a standby list creating section 31 is added and a storage medium K3a is provided instead of a storage medium K3.

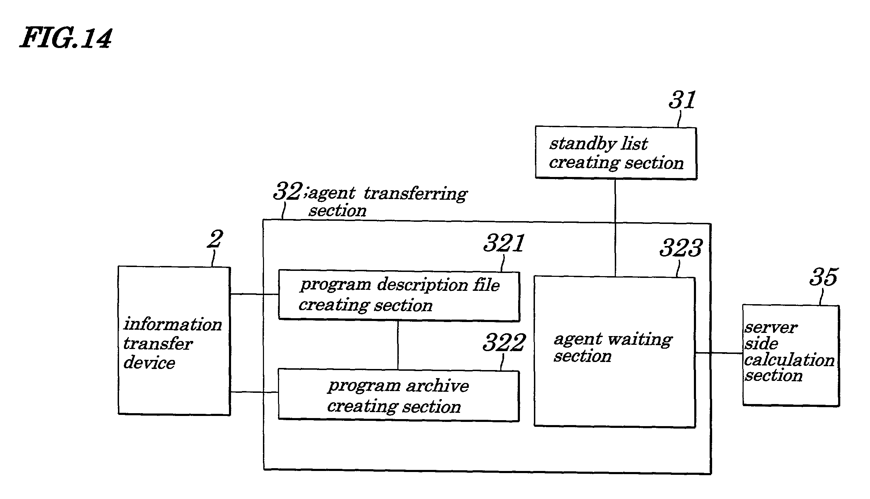

The standby list creating section 31 has a function of creating, when having received a request asking for a standby list from a portable device 1- j ( 1 ≦ j ≦ n), the standby list and of transferring it to the portable device 1 - ja being a device that has requested, by using an information transfer device 2. As shown in Fig. 14, the standby list creating section 31 is connected to an agent waiting section 323 in the agent transferring section 32 and acquires a list of identifiers of the mobile agents being in a standby state, which are required to be transferred to the portable device 1 - ja, from the agent waiting section 323 and creates the standby list.

The storage medium K3a is a disk, semiconductor memory, or other storage medium and stores a program to have the portable device 1-3a function as a part of the mobile agent transfer system for portable devices. This program is read by the server 3a made up of computers and is used to control operations of the server 3a, resulting in implementing the standby list creating section 31, the agent transferring section 32, the agent receiving section 34 and the server side calculation section 35 on the server 3a.

Next, operations of the mobile agent transfer system of the second embodiment will be described. Here, the description will be provided centering on operations of the standby list displaying section 16 and the standby list creating section 31.

The standby list displaying section 16 in the portable device 1- ja transmits, in accordance with an instruction of a user or a like, a standby list requesting message to make a request of the standby list creating section 31 for the standby list, to the standby list creating section 31 (Fig. 16, Step E10). Moreover, if the standby list creating section 31 has no means to identify a sender of the message, a portable device identifier of the portable device 1-ja is contained in the standby list requesting message.

The standby list creating section 31 receives the standby list requesting message from the standby list displaying section 16 (Fig. 17, Step G10). The standby list creating section 31, by using the portable device identifier of the portable device 1-ja being a sender of the message as a key, acquires a list of identifiers of the mobile agent being in a standby state to be transferred to the portable device 1-ja, from the agent waiting section 323 and creates the standby list using the identifiers contained in the acquired list (Fig. 17, Step G20) and then returns it to the standby list displaying section 16 (Fig. 17, Step G30).

The standby list displaying section 16, after the standby list has been returned, has an other system or a user that uses the standby list displaying section 16 select one mobile agent from the standby list (Fig. 16, Step E20). The standby list displaying section 16, if being used by a human (user), displays the standby list, for example, on a screen of the portable device 1- j and has the user select one of the mobile agents contained in the standby list. Moreover, the standby list displaying section 16, if being used by an other system in the portable device 1-j, provides the standby list to the other system and has the system select one mobile agent contained in the standby list.

The standby list displaying section 16, by using an identifier of the mobile agent selected from the standby list as an argument, outputs a mobile agent acquiring request (Fig. 16, Step E30). This causes the program acquiring section 11a to perform processing shown in the flowchart in Fig. 3. Operations thereafter are the same as those in the first embodiment.

### Third Embodiment

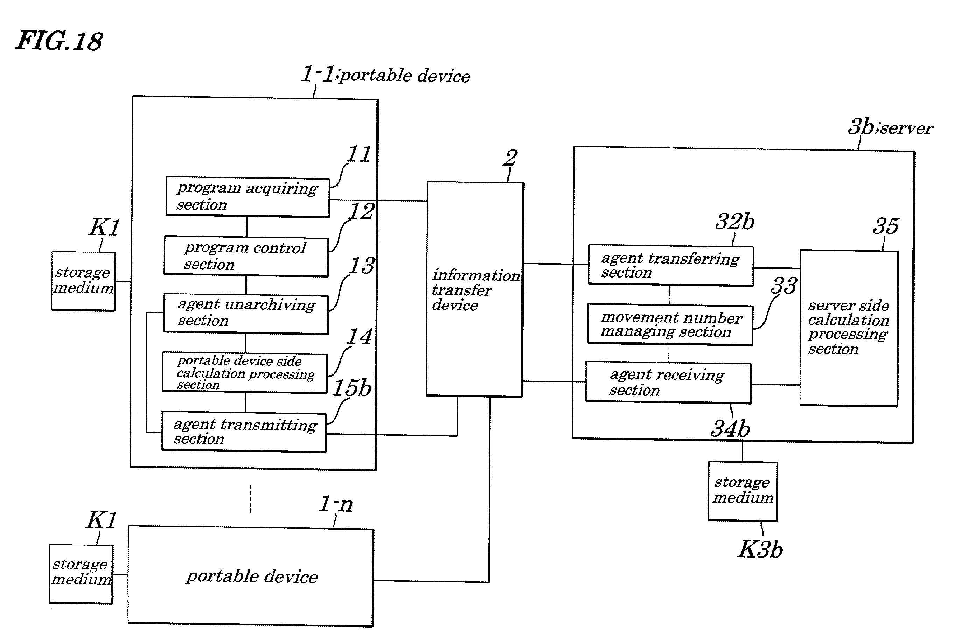

Figure 18 is a schematic block diagram showing an example of configurations of a mobile agent transfer system for portable devices according to a third embodiment of the present invention. Configurations of the mobile agent transfer system of the third embodiment differ from those of the first embodiment shown in Fig. 1 in that, instead of a server 3, a server 3b is provided. Configurations of the server 3b differ from those of the first embodiment shown in Fig. 1 in that, a movement number managing section 33 is added and that, instead of an agent transferring section 32, an agent receiving section 34, and a storage medium K3, an agent transferring section 32b, an agent receiving section 34b, and a storage medium K3b are provided respectively.

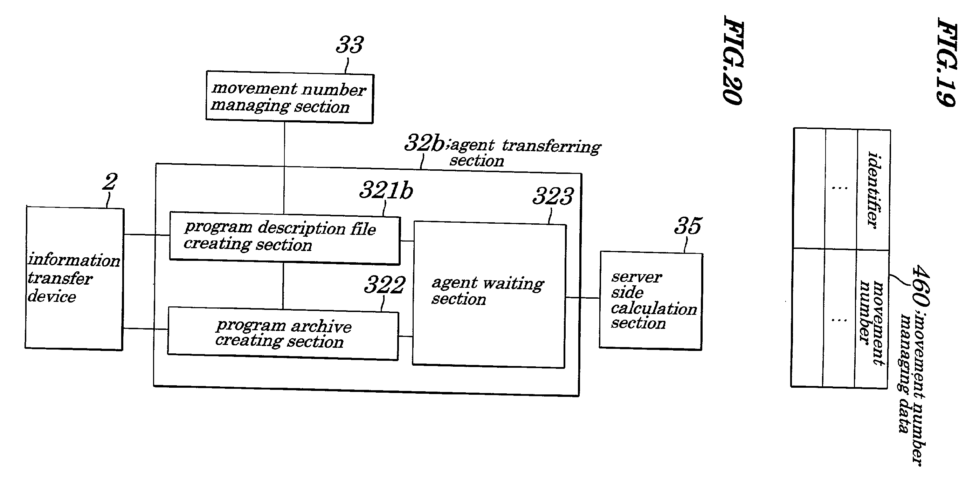

A role of the movement number managing section 33 which is newly added in the third embodiment is to manage a movement number used to assure that the number of the mobile agent being moved from the server 3b to a portable device 1 - j and being again returned to the server 3b is one. That is, for example, there may occurs a case in which a plurality of messages 450 each having same contents transmitted from an agent transmitting section 15 in the portable device 1- j reaches the agent receiving section 34b due to failures or a like of a network. In such the case, by managing the movement number, it is made possible for the agent receiving section 34b to accept only first one message and to ignore other remaining messages. Figure 19 is a diagram showing an example of movement number managing data 460 managed by the movement number managing section 33. The movement number managing data 460 is made up of an identifier of a mobile agent and a movement number.

Figure 20 is a schematic block diagram showing an example of configurations of the agent transmitting section 32b. Configurations of the agent transmitting section 32b differ from those in the first embodiment in that, instead of a program description file creating section 321, a program description file creating section 321b is provided. The program description file creating section 321b has functions, in addition of a function that the program description file creating section 321 has, of acquiring a movement number from the movement number managing section 33 and/or of incorporating the movement number into the program description file.

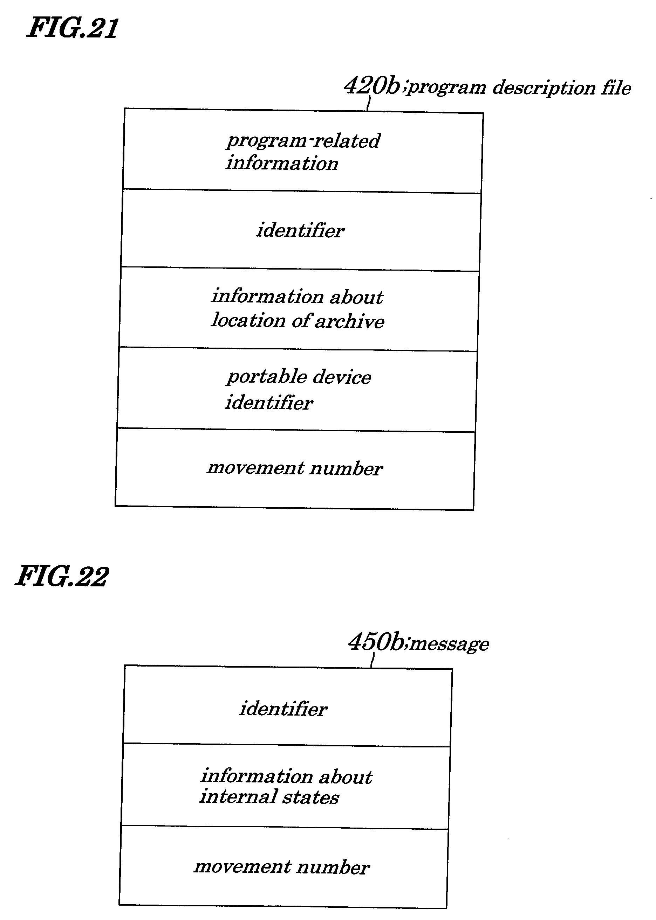

The agent receiving section 34b has functions, in addition to functions that the agent receiving section 34 of the first embodiment has, of acquiring a movement number from the movement number managing section 33, of judging whether it receives a message 450b based on a movement number acquired from the movement number managing section 33 and a movement number contained in the message 450b (the message used to transfer a mobile agent to the server 3b and will be explained in detail by referring to Fig. 22) transmitted from the portable device 1 - j and of making a request of the movement number managing section 33 to set a new movement number.

The storage medium K3b is a disk, semiconductor memory, or other storage medium and stores a program to have the server 3b made up of computers function as a part of the mobile agent transfer system for portable devices. This program is read by the server 3b and is used to control operations of the server 3b, resulting in implementing the agent transferring section 32b, the movement number managing section 33, the agent receiving section 34b, and the server side calculation processing section 35 on the server 3b.

Next, operations of the mobile agent transfer system of the third embodiment will be explained. The description will be provided centering on how the movement number being managed by the movement number managing section 33 is used and on operations being different from those in the first embodiment in particular.

In the third embodiment, operations are the same as those shown in the flowchart in Fig. 4 except the processing in Step C30 and C40.

In Step C30 in the third embodiment, the program description file creating section 321b performs processing, in addition to the processing to be performed by the program description file creating section 321 in the first embodiment, of passing an identifier of the mobile agent to the movement number managing section 33 and of receiving a movement number to be returned from the movement number managing section 33. Moreover, the movement number managing section 33, when having received an identifier of the mobile agent from the program description file creating section 321b, searches the movement number managing data 460 shown in Fig. 19 for a movement number corresponding to the above identifier and returns the searched movement number to the program description file creating section 321b as a returned value. Also, in Step C30 in the third embodiment, the archive 410 is created as in the first embodiment, however, a place code contained in the archive created in the third embodiment implements an agent transmitting section 15b, instead of the agent transmitting section 15 implemented in the first embodiment, on the portable device 1 -jb.

In Step C40 in the third embodiment, a program description file 420b as shown in Fig. 21 is created by the program description file creating section 321b, in which the movement number is newly added to contents of the program description file 420 created by the program description file creating section 321 in the first embodiment.

Also, in the third embodiment, operations in Step A110 in the flowchart in Fig. 3 are different from those explained in the first embodiment. That is, in Step A110 in the third embodiment, the agent transmitting section 15 creates the message 450b used to transfer the mobile agent to the server 3b and, as shown in Fig. 22 and the message 450b is made up of an identifier, information about internal states and a movement number.

Furthermore, operations of the agent receiving section 34b in the third embodiment are different from those of the agent receiving section 34. Operations of the agent receiving section 34b will be explained by referring to a flowchart shown in Fig. 23.

The agent receiving section 34b receives the message 450b containing a movement number from the agent transmitting section 15b(Fig. 23, Step H10). Next, the agent receiving section 34b passes an identifier of the mobile agent contained in the message 450b to the movement number managing section 33 and then the movement number managing section 33 returns the mobile agent corresponding to the identifier (Step H20). The agent receiving section 34b compares the movement number acquired from the movement number managing section 33 with the movement number contained in the above message 450b (Step H30). If they are the same, it means that the message is one that is first received and therefore the routine proceeds to next Step. If they are different, the message is judged to have been already received and therefore no further processing is performed. The agent receiving section 34b passes the identifier to the movement number managing section 33 and makes a request of the movement number managing section 33 for setting of a new movement number. The movement number managing section 33 newly creates a movement number corresponding to the identifier of movement number managing data 460 and sets the new movement number (Step H40). Then, the agent receiving section 34b unarchives the mobile agent (Step H50).

A movement number to be assigned for transfer of an arbitrary mobile agent, during a period of time from start to end of system operations, has to be different from other movement number to be assigned for a past or coming transfer of the mobile agent to a portable device. One example of a unit that can create such the movement number is a counter. The counter is set to 0 (zero) being a movement number in advance and, when a request for setting a new movement number is made, the counter is incremented by one. By the processing described above, even if a plurality of messages each having same contents arrives due to some failures of the network or a like, since the movement number is changed after the arrival of the first message, it is made possible to ignore the subsequently arrived messages having the same contents that its previous message had.

Communications between the portable device 1 shown in Fig. 1 and the information transfer device 2 can be carried out by using HTTP (Hypertext Transfer Protocol) designated in RFC2616, Hypertext Transfer Protocol - HTTP/1.1., in June 1996. The communications between the information transfer device 2 and the server 3 can be carried out by using a Web server and "Servlet" disclosed in "Java Servlet Specification, V2.2" issued by Sun Microsystems in December 1999.

It is apparent that the present invention is not limited to the above embodiments but may be changed and modified without departing from the scope and spirit of the invention. For example, it is possible to additionally provide the standby list displaying section 16 and standby list creating section 31 employed in the second embodiment and the movement number managing section 33 employed in the third embodiment to configurations of the first embodiment.

## Claims

1. A mobile agent transfer system for portable devices (1-j) **characterized by** comprising:
a server (3, 3a, 3b);
a portable device (1-j); and
wherein a mobile agent is transferred between said server (3, 3a, 3b) and said portable device (1-j);
wherein said server (3, 3a, 3b) has a configuration so as to transfer, to said portable device (1-j), a place code used to implement, on a side of said portable device (1-j), an environment in which said mobile agent is able to be executed when said mobile agent is transferred from said server (3, 3a, 3b) to said portable device (1-j); and
wherein said portable device (1-j) has a configuration so as to implement, on a side of said portable device (1-j) and based on said place code transferred from said server (3, 3a, 3b), an environment in which said mobile agent is able to be executed.

2. The mobile agent transfer system for portable devices (1-j) according to Claim 1, wherein said place code is used to implement, on said portable device (1-j), an agent unarchiving section (13) used to reconstruct said mobile agent based on information transmitted from said server (3, 3a, 3b), a portable device side calculation processing section to (14) run said mobile agent reconstructed by said agent unarchiving section (13), and an agent transmitting section (15, 15b) used to transmit said mobile agent having completed operations in said portable device side calculation processing section (14) to said server (3, 3a, 3b) and wherein said portable device (1-j) has a program control section (12) to implement, on said portable device (1-j), said agent unarchiving section (13), said portable device side calculation processing section (14), said agent transmitting section (15, 15b) based on said place code transmitted from said server (3, 3a, 3b).

3. A mobile agent transfer system for mobile communicating devices (1-j) **characterized by** comprising:
a server (3, 3a, 3b);
a mobile communicating device (1-j);
an information transfer device (2) to connect said mobile communicating device (1-j) to said server (3, 3a, 3b); and
wherein a mobile agent is transferred between said server (3, 3a, 3b) and said mobile communicating device (1-j) through said information transfer device (2);
wherein said server (3, 3a, 3b) has a server side calculation processing section (35) to run said mobile agent, an agent transferring section (32, 32b) used to transfer, to said mobile communicating device (1-j), information about an internal state of said mobile agent, a program code of said mobile agent, a place code used to implement, on said mobile communicating device (1-j), an agent reconstructing section (13), mobile communicating device side calculation processing section (14) and agent transmitting section (15, 15b), and an agent receiving section (34) used to retrieve said mobile agent transferred from said mobile communicating device (1-j) and to put said mobile agent into a state where said mobile agent is able to start operations in said server side calculation processing section (35), and
wherein said mobile communicating device (1-j) has a program acquiring section (11, 11a) used to acquire said information about an internal state of said mobile agent, said program code of said mobile agent, and said place code transmitted from said server (3, 3a, 3b) and a program control section (12) to implement, on said mobile communicating device (1-j), said agent reconstructing section (13), said mobile communicating device side calculation processing section (14) and said agent transmitting section (15, 15b), based on said place code acquired by said program acquiring section (11, 11a), wherein said agent reconstructing section (13) has a configuration so as to reconstruct said mobile agent based on said information about internal states of said mobile agent and said program code of said mobile agent, wherein said mobile communicating device side calculation processing section (14) has a configuration so as to run said mobile agent reconstructed by said agent reconstructing section (13) and wherein said agent transmitting section (15, 15b) has a configuration so as to transmit said mobile agent having completed operations in said portable side calculation processing section (14) to said server (3, 3a, 3b).

4. The mobile agent transfer system for mobile communicating devices (1-j) according to Claim 3, wherein said server (3, 3a, 3b) has a standby list creating section (31) used to transmit, to said mobile communicating device (1-j), a standby list showing mobile agents being in a standby state to be transferred to said mobile communicating device (1-j), wherein said mobile communicating device (1-j) has a standby list displaying section (16) used to provide said standby list transmitted from said server (3, 3a, 3b) to a user or other device (1-j) and to notify said program acquiring section (11, 11a) of said mobile agent selected by said user or other device (1-j) out of mobile agents indicated by said provided standby list, and wherein said program acquiring section (11, 11a) has a configuration so as to make a request for acquiring said
mobile agent notified by said standby list displaying section (16) to said server (3, 3a, 3b).

5. The mobile agent transfer system for mobile communicating devices (1-j) according to Claim 3, wherein said server (3, 3a, 3b) has a movement number managing section (33) used to create and manage a movement number required to ignore messages other than a message that has first arrived when a plurality of messages each having same contents to transfer a mobile agent has reached said agent receiving section (34) from said agent transmitting section (15, 15b) in said mobile communicating device (1-j) due to a failure of a network.

6. The mobile agent transfer system for mobile communicating devices (1-j) according to Claim 3, wherein said agent transferring section (32, 32b) has an agent waiting section (323) used to manage information about an identifier of a mobile agent and location of a program code of said mobile agent being in a standby state to be transferred to said mobile communicating device (1-j), a program description file creating section (321, 321b) used to make a request of a program archive creating section (322) to create an archive when a request for a program description file for a mobile agent is made from said program acquiring section (11, 11a) and to return said program description file containing a location of said archive created by said program archive creating section (322) to said program acquiring section (11, 11a), and a program archive creating section (322) used to create, in response to a request from said program description file creating section, an archive containing a program code of a mobile agent, information about an internal state of said mobile agent, and a place code, and to return, in response to a request from said program acquiring section (11, 11a), said archive.

7. A method for transferring a mobile agent for portable devices (1-j) between a portable device (1-j) and a server (3, 3a, 3b), said method **characterized by** comprising:
a step in which said server (3, 3a, 3b) transfers, to said portable device (1-j), a place code used to implement, on a side of said portable device (1-j), an environment in which said mobile agent is able to be executed when said mobile agent is transferred from said server (3, 3a, 3b) to said portable device (1-j); and
a step in which said portable device (1-j) implements, on said portable device (1-j) and based on said place code transferred from said server (3, 3a, 3b), an environment in which said mobile agent is executed.

8. The method for transferring the mobile agent for portable devices (1-j) according to Claim 7, wherein said place code is used to implement, on said portable device (1-j), an agent reconstructing section (13) used to reconstruct said mobile agent based on information transmitted from said server (3, 3a, 3b), a portable device side calculation processing section (14) to run said mobile agent reconstructed by said agent reconstructing section (13), and an agent transmitting section (15, 15b) used to transfer said mobile agent having completed operations in said portable device side calculation processing section (14) to said server (3, 3a, 3b) and wherein said portable device (1-j) has a program control section (12) to implement, on said portable device (1-j) and based on said place code transmitted from said server, (3, 3a, 3b) said agent reconstructing section (13), said portable device side calculation processing section (14) and said agent transmitting section (15, 15b).

9. A method for transferring a mobile agent for portable devices (1-j) for transferring said mobile agent between a portable device (1-j) and a server (3, 3a, 3b), said method **characterized by** comprising:
a step in which said server (3, 3a, 3b) transfers information about an internal state of a mobile agent, a program code of said mobile agent, and a place code used to implement, on said portable device (1-j), an agent reconstructing section (13), portable device side calculation processing section (14), and agent transmitting section (15, 15b), to said portable device (1-j);
a step in which said portable device (1-j) implements, based on said place code transmitted from said server (3, 3a, 3b), said agent reconstructing section (13), said portable device side calculation processing section (14), and said agent transmitting section (15, 15b);
a step in which said agent reconstructing section (13) reconstructs said mobile agent, based on said information about said internal states and said program code of said mobile agent transmitted from said server (3, 3a, 3b);
a step in which said portable device side calculation processing section (14) executes said mobile agent that has been reconstructed by said agent reconstructing section (13); and
a step in which said agent transmitting section (15, 15b) transmits said mobile agent having completed operations in said portable device side calculation processing section (14).

10. The method for transferring the mobile agent for portable devices (1-j) according to Claim 9, wherein said server (3, 3a, 3b) transmits, to said portable device (1-j), a standby list showing mobile agents being in a standby state to be transferred to said portable device (1-j) and wherein said portable device (1-j) provides said standby list transmitted from said server (3, 3a, 3b) to a user or other device (1-j) and to make a request of said server (3, 3a, 3b) for said mobile agent selected by said user or other device (1-j) out of mobile agents indicated by said provided standby list.

11. The method for transferring the mobile agent for portable devices (1-j) according to Claim 9, wherein said server (3, 3a, 3b) creates and manages a movement number required to ignore messages other than a message that has first arrived when a plurality of messages each having same contents to transfer a mobile agent has reached said agent receiving section (34) from said portable device (1-j) due to a failure of a network.

12. A program for implementing a mobile agent transfer system for portable devices (1-j) to enable a mobile agent to be transferred between a computer for a portable device (1-j) and a computer for a server (3, 3a, 3b) **characterized by** comprising:
processing of having said computer for said server (3, 3a, 3b) transfer a place code used to implement, on said computer for said portable device (1-j), an environment in which said mobile agent is able to be executed when said mobile agent is transferred to said computer for said portable device (1-j); and
processing of having said computer for said portable device (1-j) implement, on said computer for said portable device (1-j) and based on a place code transferred from said computer for said server (3, 3a, 3b), an environment in which said mobile agent is able to be executed.

13. A program for implementing a mobile agent transfer system for portable devices (1-j) to enable a mobile agent to be transferred between a computer for a portable device (1-j) and a computer for a server (3, 3a, 3b) **characterized by** comprising:
processing of having said computer for said server (3, 3a, 3b) function as a server computer side calculation processing section (35) to run said mobile agent, as an agent transferring section (32, 32b) to transfer, to said computer for said portable device (1-j), information about internal states of said mobile agent and about a program code of said mobile agent and a place code used to implement, on said computer for said portable device (1-j) and based on internal states and program code of said mobile agent transmitted from said computer for said server (3, 3a, 3b), an agent unarchiving section (13) to reconstruct said mobile agent, portable device side calculation processing section (14) to run said mobile agent reconstructed by said agent unarchiving section (13), and an agent transmitting section (15, 15b) to transmit said mobile agent having completed operations in said portable device side calculation processing section (14) to said computer for said server (3, 3a, 3b), and as an agent receiving section (34) to unarchive said mobile agent transferred from said computer for said portable device (1-j) and to put said mobile agent into a state where said mobile agent is able to start operations on said server computer side calculation processing section (35), and
processing of having said computer for said portable device (1-j) function as a program acquiring section (11, 11a) to acquire information about internal states and program code of said mobile agent transmitted from said computer for said server (3, 3a, 3b) and a place code, and as a program control section (12) to implement, on said computer for said portable device (1-j) and based on said place code acquired by said program acquiring section (11, 11a), said agent unarchiving section (13), said portable device side calculation processing section (14), and said agent transmitting section (15, 15b).

14. A storage medium (K1, K1a) storing a program for implementing a mobile agent transfer system for portable devices (1-j) to enable a mobile agent to be transferred between a computer for a portable device (1-j) and a computer for a server (3, 3a, 3b) **characterized by** comprising:
processing of having said computer for said server (3, 3a, 3b) transfer a place code used to implement, on said computer for said portable device (1-j), an environment in which said mobile agent is able to be executed when said mobile agent is transferred to said computer for said portable device (1-j); and
processing of having said computer for said portable device (1-j) implement, on said computer for said portable device (1-j) and based on a place code transferred from said computer for said server (3, 3a, 3b), an environment in which said mobile agent is able to be executed.

15. A storage medium (K1, K1a) storing a program for implementing a mobile agent transfer system for portable devices (1-j) to enable a mobile agent to be transferred between a computer for a portable device (1-j) and a computer for a server (3, 3a, 3b) **characterized by** comprising:
processing of having said computer for said server (3, 3a, 3b) function as a server computer side calculation processing section (35) to run said mobile agent, as an agent transferring section (32, 32b) to transfer, to said computer for said portable device (1-j), information about internal states of said mobile agent and about a program code of said mobile agent and a place code used to implement, on said computer for said portable device (1-j) and based on internal states and program code of said mobile agent transmitted from said computer for said server (3, 3a, 3b), an agent unarchiving section (13) to reconstruct said mobile agent, portable device side calculation processing section (14) to run said mobile agent reconstructed by said agent unarchiving section (13), and an agent transmitting section (15, 15b) to transmit said mobile agent having completed operations in said portable device side calculation processing section (14) to said computer for said server (3, 3a, 3b), and as an agent receiving section (34) to unarchive said mobile agent transferred from said computer for said portable device (1-j) and to put said mobile agent into a state where said mobile agent is able to start operations on said server computer side calculation processing section (35), and
processing of having said computer for said portable device (1-j) function as a program acquiring section (11, 11a) to acquire information about internal states and program code of said mobile agent transmitted from said computer for said server (3, 3a, 3b) and a place code, and as a program control section (12) to implement, on said computer for said portable device (1-j) and based on said place code acquired by said program acquiring section (11, 11a), said agent unarchiving section (13), said portable device side calculation processing section (14), and said agent transmitting section (15, 15b).

16. A mobile agent transfer system for mobile communicating devices (1-j) **characterized by** comprising:
a server (3, 3a, 3b);
a mobile communicating device (1-j); and
wherein a mobile agent is transferred between said server (3, 3a, 3b) and said mobile communicating device (1-j);
wherein said server (3, 3a, 3b) has a configuration so as to transfer, to said mobile communicating device (1-j), a place code used to implement, on a side of said mobile communicating device (1-j), an environment in which said mobile agent is able to be executed when said mobile agent is transferred from said server (3, 3a, 3b) to said mobile communicating device (1-j) ; and
wherein said mobile communicating device (1-j) has a configuration so as to implement, on a side of said mobile communicating device (1-j) and based on said place code transferred from said server (3, 3a, 3b), an environment in which said mobile agent is able to be executed.

17. The mobile agent transfer system for mobile communicating devices (1-j) according to Claim 16, wherein said place code is used to implement, on said mobile communicating device (1-j), an agent reconstructing section (13) to reconstruct said mobile agent based on information transmitted from said server (3, 3a, 3b), a mobile communicating device side calculation processing section (14) to run said mobile agent reconstructed by said agent reconstructing section (13), and an agent transmitting section (15, 15b) used to transmit said mobile agent having completed operations in said portable device side calculation processing section (14) to said server (3, 3a, 3b) and wherein said mobile communicating device (1-j) has a program control section (12) to implement, on said mobile communicating device (1-j), said agent reconstructing section (13), said mobile communicating device side calculation processing section (14), said agent transmitting section (15, 15b) based on said place code transmitted from said server (3, 3a, 3b).
